# FASCICULE DE BREVET EUROPEEN

(11) **EP 3 197 640 B1**
(45) Date de publication et mention de la délivrance du brevet: **23.08.2023**
(21) Numéro de dépôt: 15771077.3
(22) Date de dépôt: 24.09.2015
(51) Int. Cl.: B25H 1/00, B25B 11/00, B23Q 1/03, B23Q 3/08

(54) **DISPOSITIF DE RÉCEPTION ADAPTABLE POUR PIÈCE DE VÉHICULE AUTOMOBILE**
ANPASSBARE AUFNAHMEEINRICHTUNG FÜR EIN KRAFTFAHRZEUGTEIL
ADJUSTABLE DEVICE FOR RECEIVING A PART OF A MOTOR VEHICLE

(30) Priorité: 24.09.2014 FR 1459006
(43) Date de publication de la demande: 02.08.2017
(73) Titulaire: Renault s.a.s, 92100 Boulogne Billancourt (FR); Clemessy SA, 68200 Mulhouse (FR)
(72) Inventeur: THEVENOT, Eric, 91130 Ris-Orangis (FR); STEFFEN, Henri, 78000 Versailles (FR); PAVAN, Robert, 28410 Goussainville (FR); NIER, Michel, 35580 Goven (FR)
(74) Mandataire: Novaimo
(86) Numéro de dépôt international: PCT/EP2015/072028
(87) Numéro de publication internationale: WO 2016/046338

(56) Documents cités:
- EP-A1- 0 567 803
- EP-A2- 2 818 418
- EP-B1- 1 307 317
- EP-B1- 1 307 317
- DE-A1- 10 023 921
- DE-A1- 10 023 921
- FR-A1- 2 997 677
- JP-A- 2008 213 055
- JP-A- 2008 213 055
- US-A- 5 026 033
- US-A- 5 107 577
- US-A1- 2012 145 849
- US-A1- 2012 145 849
- US-A1- 2012 240 849
- US-B1- 6 250 619
- US-B1- 6 250 619

## Description

### Domaine technique de l'invention

L'invention concerne le domaine de l'automobile.

L'invention a pour objet plus particulièrement un dispositif de réception d'une pièce d'un véhicule automobile permettant notamment le maintien de ladite pièce en vue de travaux à effectuer sur cette dernière.

### État de la technique

Dans le domaine de la fabrication des véhicules automobiles, il est habituel d'isoler certaines pièces en vue d'effectuer certaines actions sur ces dernières.

Selon un exemple particulier, il est connu d'immobiliser une garniture d'un pavillon de toit d'un véhicule automobile pour réaliser une ou plusieurs opérations de découpe sur ladite garniture.

En ce sens, il a été développé des bancs de réception de pavillons de toit adaptés à leurs formes spécifiques. Pour cela, le banc de réception comporte des contres-formes configurées de sorte à épouser la forme d'une face du pavillon de toit, notamment de la face du pavillon de toit orientée à l'opposée de l'habitacle du futur véhicule.

L'utilisation de tels bancs rend d'une part les coûts importants car ils doivent correspondre à une moulure adaptée de parties de la pièce à réceptionner et cela nécessite de modifier le poste de travail en changeant les contres-formes lorsque l'on traite un pavillon de toit d'un modèle de véhicule non compatible. En ce sens, cela augmente les coûts de fabrication et le temps de fabrication d'un véhicule automobile.

Par ailleurs, un dispositif de réception d'une pièce d'un véhicule automobile selon le préambule de la revendication 1 et un procédé de réception d'une pièce dans un dispositif de réception sont connus du document US 2012/145849 A1.

### Objet de l'invention

Le but de la présente invention est de proposer une solution qui remédie à tout ou partie des inconvénients listés ci-dessus.

L'invention propose un dispositif de réception d'une pièce d'un véhicule automobile selon la revendication 1, ledit dispositif de réception étant muni d'un module de mise en référence de ladite pièce configuré de sorte à coopérer avec au moins une ouverture de ladite pièce, d'un module de centrage de ladite pièce, et d'un module de maintien de ladite pièce par rapport à un référentiel dudit dispositif de réception.

Notamment, le module de maintien comporte au moins un organe d'adhésion, par exemple une ventouse, configuré de sorte à coopérer avec une surface extérieure de ladite pièce.

Selon une réalisation, le module de maintien comporte au moins une rotule permettant d'adapter l'inclinaison d'une portée du module de maintien destinée à venir en contact avec ladite pièce.

Avantageusement, ladite portée appartient à l'organe d'adhésion.

Selon une réalisation, l'organe d'adhésion comporte un système d'aspiration.

Selon l'invention, ledit référentiel étant orthonormé et défini par trois axes X, Y et Z, le module de mise en référence est configuré de sorte à présenter un réglage selon deux axes distincts respectivement parallèles aux axes Y et Z, et le module de maintien est configuré de sorte à présenter un réglage selon trois axes distincts respectivement parallèles aux axes X, Y et Z.

Par exemple, le module de centrage comporte deux éléments d'appui présentant chacun une surface destinée à coopérer avec ladite pièce, lesdites surfaces étant incluses dans des plans distincts et sécants. Préférentiellement, ladite pièce à réceptionner étant une garniture de pavillon de toit, le module de mise en référence est configuré de sorte à coopérer avec deux ouvertures du pavillon de toit disposées de manière opposée et destinées au montage des pare-soleils avant du véhicule automobile.

Le dispositif peut en outre comporter un module de paramétrage configuré de sorte à adapter ledit dispositif de réception à un modèle particulier de la pièce à réceptionner, notamment le module de paramétrage comporte une entrée configurée de sorte à réceptionner des données, en particulier des données d'un modèle numérique de ladite pièce à réceptionner, et une sortie reliée à des actionneurs permettant d'adapter, en fonction des données réceptionnées, le réglage du module de mise en référence et/ou du module de maintien et/ou du module de centrage au sein du référentiel.

Le dispositif peut en outre comporter une pluralité de modules de maintien et le module de mise en référence et les modules de maintien sont échelonnés le long d'un même axe.

L'invention est aussi relative à une installation de travail sur une pièce d'un véhicule automobile, ladite installation comportant un dispositif de réception de ladite pièce tel que décrit, et au moins un outil destiné à modifier ladite pièce, notamment un outil de découpe.

Enfin, l'invention porte aussi sur un procédé de réception d'une pièce d'un véhicule automobile selon la revendiction 11, à l'aide d'un dispositif de réception tel que décrit précédemment. Ce procédé est plus particulièrement défini par la revendication 12.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue en perspective d'un dispositif de réception à vide selon un mode d'exécution particulier de l'invention,
- la figure 2 est une vue en perspective du dispositif de réception de la figure 1 réceptionnant la pièce,
- la figure 3 est une vue en perspective détaillée d'une partie du dispositif de maintien.

### Description de modes préférentiels de l'invention

Le dispositif de réception décrit ci-après diffère de l'art antérieur en ce qu'il comporte différents modules facilitant l'adaptation à différents types de pièces, notamment différents pavillons de toit. Plus généralement, ce dispositif de réception est avantageusement adapté à toute pièce d'un véhicule automobile se présentant sous la forme d'une tôle. Une telle pièce peut être une paroi d'un véhicule automobile, un ouvrant comme une porte, etc.

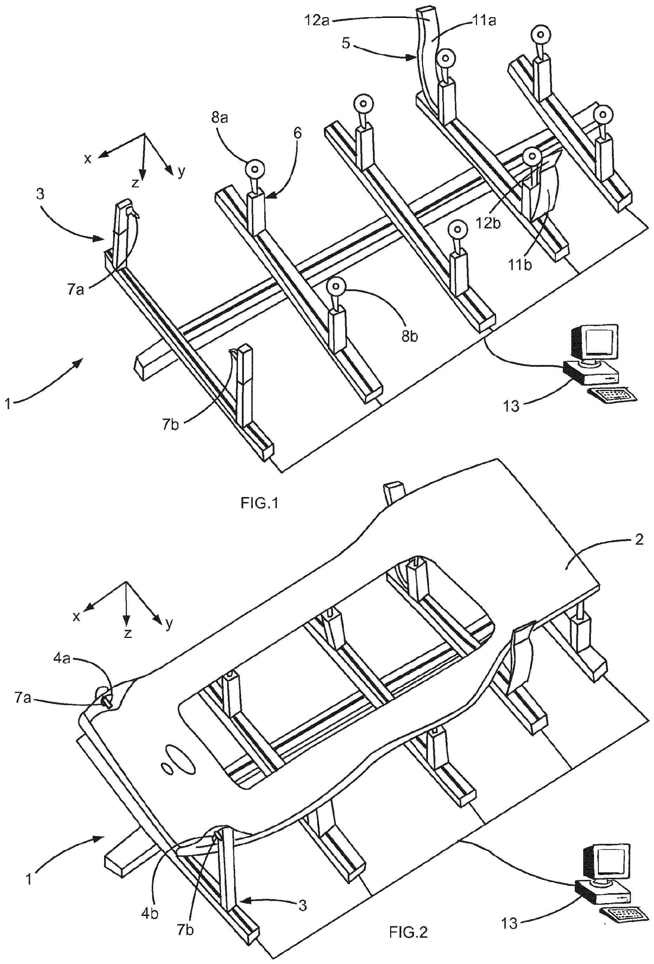

Comme illustré aux figures 1 et 2, le dispositif de réception 1 d'une pièce 2 d'un véhicule automobile est muni d'un module de mise en référence 3 de ladite pièce 2 configuré de sorte à coopérer avec au moins une ouverture 4a, 4b (figure 2) de ladite pièce 2. Le dispositif de réception 1 comporte aussi un module de centrage 5 de ladite pièce 2, et un module de maintien 6 de ladite pièce 2 par rapport à un référentiel (X, Y, Z) dudit dispositif de réception 1.

Avantageusement, le module de maintien 6 ne nécessite pas de contre-forme.

Cette architecture particulière du dispositif de réception permet notamment de supprimer les dispositifs existant à contre-forme en réalisant des modules ayant chacun une fonction qui lui est associée et adaptatif à chaque pièce 2.

Le référentiel est orthonormé et défini par trois axes X, Y et Z. Ladite pièce 2 étant une pièce de véhicule automobile, si l'on oriente le référentiel X, Y, Z du dispositif des figures 1 et 2 de la même manière que celui d'un véhicule automobile dans lequel est montée la pièce 2, les trois axes X, Y et Z seraient respectivement parallèles à l'axe longitudinal du véhicule automobile, l'axe transversal du véhicule, l'axe vertical du véhicule automobile.

Selon un mode de réalisation particulier, ladite pièce 2 à réceptionner est une garniture de pavillon de toit comme l'illustre la figure 2. Dans ce cas particulier, le module de mise en référence 3 est configuré de sorte à coopérer avec deux ouvertures 4a, 4b du pavillon de toit 2 disposées de manière opposée et destinées au montage des pare-soleils avant du véhicule automobile. Sur la figure 2, la garniture de pavillon de toit est une garniture pour un véhicule à toit vitré et/ou ouvrant.

Autrement dit, lorsque la pièce 2 est montée au dispositif de réception, le module de référence 3 comporte au moins un organe 7a, 7b pénétrant dans la ou les ouvertures de la pièce 2. Dans l'exemple particulier du pavillon de toit, le pavillon de toit 2 comporte deux ouvertures 4a, 4b destinées au montage des pare-soleils et ces deux ouvertures 4a, 4b sont traversées chacune par un organe 7a, 7b associé.

On comprend alors que de manière générale, le référencement tire avantageusement partie d'ouvertures déjà présentes dans la pièce 2 pour assurer le positionnement et préférentiellement participer à un maintien adéquat de la pièce 2.

De préférence, le module de maintien 6 comporte au moins un organe d'adhésion 8a, 8b, par exemple une ventouse, configuré de sorte à coopérer avec une surface extérieure de ladite pièce 2.

Avantageusement, le module de maintien 6 comporte deux organes d'adhésion 8a, 8b, notamment disposés à distance l'un de l'autre le long d'un axe parallèle à l'axe Y du référentiel.

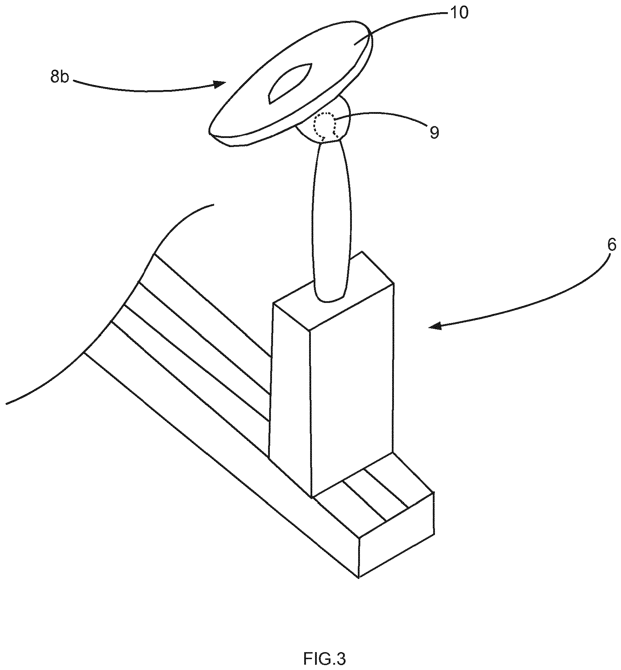

Comme illustré en figure 3, le module de maintien 6 comporte au moins une rotule 9 permettant d'adapter l'inclinaison d'une portée 10 du module de maintien 6 destinée à venir en contact avec ladite pièce 2. En particulier, la portée 10 fait partie intégrante d'un élément, notamment formé par la ventouse décrite ci-dessus, monté sur la rotule de telle sorte à adapter le positionnement de ladite portée 10 correspondante.

On comprend alors que ladite portée 10 peut appartenir à l'organe d'adhésion 8a, 8b.

De préférence, l'organe d'adhésion 8a, 8b comporte un système d'aspiration. Ce système d'aspiration permet de créer une dépression assurant le maintien de ladite pièce 2.

Selon une mise en oeuvre, le module de centrage 5 comporte deux éléments d'appui 11a, 11b présentant chacun une surface 12a, 12b destinée à coopérer avec ladite pièce 2, lesdites surfaces 12a, 12b étant incluses dans des plans distincts et sécants. En fait ces surfaces 12a, 12b sont préférentiellement agencées de telle sorte à permettre le guidage de la pièce 2 lorsqu'elle est déposée sur le dispositif de réception 1. En ce sens, l'inclinaison des deux surfaces 12a, 12b est réalisée de manière convergente selon une direction orientée dans le sens correspondant au sens d'introduction de la pièce 2 dans le dispositif de réception 1.

Selon un mode de réalisation de l'invention permettant au dispositif de réception 1 de s'adapter à une grande diversité de pièces 2, le module de mise en référence 3 est configuré de sorte à présenter un réglage selon deux axes distincts respectivement parallèles aux axes Y et Z, et le module de maintien 6 est configuré de sorte à présenter un réglage selon trois axes distincts respectivement parallèles aux axes X, Y et Z. De préférence, le module de centrage 5 peut aussi être réglé selon trois axes distincts respectivement parallèles aux axes X, Y et Z.

La diversité entre différentes pièces s'entend notamment en ce que ces pièces sont différentes en formes et/ou en dimensions.

En ce sens, dans le cadre où le module de mise en référence 3 comporte deux organes de pénétration 7a, 7b, le réglage selon Y permet d'adapter l'écartement entre ces deux organes de pénétration 7a, 7b, et le réglage selon Z permet de régler la hauteur de chacun des deux organes de pénétration 7a, 7b par rapport à un plan de référence parallèle au plan défini par les axes X et Y du référentiel.

Sur le même principe, dans le cadre où le module de maintien 6 comporte deux organes d'adhésion 8a, 8b, le réglage selon Y permet d'adapter l'écartement entre ces deux organes d'adhésion 8a, 8b, le réglage selon Z permet de régler la hauteur de chacun des deux organes d'adhésion 8a, 8b par rapport à un plan de référence parallèle au plan défini par les axes X et Y du référentiel, et le réglage selon X permet d'adapter l'écartement de ces deux organes d'adhésion 8a, 8b par rapport au module de mise en référence 3.

Par ailleurs, dans le cadre où le module de centrage 5 comporte deux éléments d'appui 11a, 11b, le réglage selon Y permet d'adapter l'écartement entre ces deux éléments d'appui 11a, 11b, le réglage selon Z permet de régler la hauteur de chacun des éléments d'appui 11a, 11b par rapport à un plan de référence parallèle au plan défini par les axes X et Y du référentiel, et le réglage selon X permet d'adapter l'écartement de ces deux éléments d'appui 11a, 11b par rapport au module de mise en référence 3.

De préférence, lorsque les modules comportent un réglage selon l'axe Z, ils peuvent comporter une ou plusieurs butées permettant de limiter la course dudit réglage. Il peut en aller de même pour les réglages en X ou Y.

Ces différents réglages peuvent être permis grâce à l'utilisation d'axes numérisés. La description de tels axes communs dans le domaine de l'automatisation ne sera pas exposée ici en détail car bien connue de l'homme du métier.

On comprend de ce qui a été dit précédemment que dans certains cas il faudra régler le ou les modules du dispositif de réception. En ce sens, le dispositif de réception 1 peut comporter un module de paramétrage 13 configuré de sorte à adapter ledit dispositif de réception 2 à un modèle particulier de la pièce 2 à réceptionner, notamment le module de paramétrage 13 comporte une entrée configurée de sorte à réceptionner des données, en particulier des données d'un modèle numérique de ladite pièce à réceptionner, et une sortie reliée à des actionneurs permettant d'adapter, en fonction des données réceptionnées, le réglage du module de mise en référence 3 et/ou le réglage du module de maintien 6 et/ou le réglage du module de centrage 5 au sein du référentiel.

Selon un mode d'exécution particulier, le dispositif de réception 1 comporte une pluralité de modules de maintien 6 et le module de mise en référence 3 et les modules de maintien 6 sont échelonnés le long d'un même axe, notamment parallèle à l'axe X. Sur l'exemple particulier des figures 1 et 2, le dispositif de réception comporte successivement selon l'axe X : le module de mise en référence 3 et quatre modules de maintien 6. En outre, le module de centrage 5 peut, comme sur la figure 1, être associé à l'un des modules de maintien 6, notamment au module de maintien disposé juste avant le module de maintien 6 le plus éloigné dudit module de mise en référence 3. Bien entendu, cet exemple n'est donné qu'à titre indicatif, l'homme du métier pourra adapter le nombre de module en fonction des besoins.

On comprend de ce qui a été dit ci-dessus que le dispositif de réception peut comporter une configuration de travail dans laquelle la pièce 2 coopère de la ou des manières décrites ci-dessus avec les modules de mise en référence, de maintien(s) et de centrage.

L'invention est aussi relative à une installation de travail sur une pièce 2 d'un véhicule automobile. Cette installation peut comporter un dispositif de réception de ladite pièce 2 tel que décrit, et au moins un outil destiné à modifier ladite pièce 2, notamment un outil de découpe.

L'invention porte aussi sur un procédé de réception d'une pièce 2 d'un véhicule automobile, à l'aide d'un dispositif de réception tel que décrit précédemment. Ce procédé de réception d'une pièce 2 comprend les étapes suivantes :
- réception de données d'un modèle numérique de la pièce à réceptionner ;
- transmission d'instructions de réglage à des actionneurs permettant d'adapter, en fonction des données réceptionnées, le réglage du module de mise en référence 3 et/ou le réglage du module de maintien 6 et/ou le réglage du module de centrage 5 au sein du référentiel pour adapter le dispositif de réception 2 à la pièce à réceptionner.

Ces étapes du procédé sont avantageusement mises en oeuvre de manière automatique ou quasi-automatique par le module de paramétrage 13. Pour cela, ce dernier comprend des moyens matériel et logiciel. Il peut comprendre une mémoire électronique, notamment pour le stockage des données d'un modèle numérique d'une pièce à réceptionner, et éventuellement pour les données numériques représentant les réglages d'un dispositif de réception, adaptés à une ou plusieurs pièces à réceptionner. Enfin, ce module de paramétrage est relié par un dispositif de communication à des actionneurs associés à un dispositif de réception 1, qui sont aptes à la mise en oeuvre des réglages à partir des instructions reçues. En variante, le module de paramétrage peut comprendre une interface homme machine pour recevoir des données numériques saisies par un opérateur, ou un dispositif de communication lui permettant de recevoir des données numériques, par exemple d'une pièce à réceptionner, automatiquement depuis un ordinateur distant.

La seconde étape comprend le réglage du dispositif de réception dans un référentiel orthonormé défini par trois axes X, Y et Z, de sorte que le module de mise en référence 3 est configuré de façon à présenter un réglage selon deux axes distincts respectivement parallèles aux axes Y et Z, et/ou le module de maintien 6 est configuré de façon à présenter un réglage selon trois axes distincts respectivement parallèles aux axes X, Y et Z.

Le procédé décrit précédemment est avantageusement mis en oeuvre avec une pièce à réceptionner qui comprend deux ouvertures, notamment une garniture de pavillon de toit avec deux ouvertures 4 disposées de manière opposée et destinées au montage d'accessoires tels que des pare-soleils à l'avant du véhicule automobile, ou une tôle formant une partie d'un véhicule automobile, le procédé comprenant une étape de mise en référence de sorte que le module de mise en référence 3 coopère avec les deux ouvertures de la pièce à réceptionner.

Un mode de réalisation ne faisant pas partie de l'invention porte aussi sur un procédé de travail d'une pièce 2 d'un véhicule automobile maintenue dans un dispositif de réception 1. Ce procédé peut comprendre une étape de découpe ou de mise en forme de la pièce.

## Revendications

1. Dispositif de réception (1) d'une pièce (2) d'un véhicule automobile, ledit dispositif de réception étant muni d'un module de mise en référence (3) de ladite pièce (2) configuré de sorte à coopérer avec au moins une ouverture (4a, 4b) de ladite pièce (2), d'un module de centrage (5) de ladite pièce (2), et d'un module de maintien (6) de ladite pièce par rapport à un référentiel dudit dispositif de réception (1), ledit référentiel est orthonormé et défini par trois axes X, Y et Z, le module de mise en référence (3) étant configuré de sorte à présenter un réglage selon deux axes distincts respectivement parallèles aux axes Y et Z, **caractérisé en ce que** le module de maintien (6) est configuré de sorte à présenter un réglage selon trois axes distincts respectivement parallèles aux axes X, Y et Z.

2. Dispositif selon la revendication précédente, **caractérisé en ce que** le module de maintien (6) comporte au moins un organe d'adhésion (8a, 8b), par exemple une ventouse, configuré de sorte à coopérer avec une surface extérieure de ladite pièce (2).

3. Dispositif selon l'une des revendications précédentes, **caractérisé en ce que** le module de maintien (6) comporte au moins une rotule (9) permettant d'adapter l'inclinaison d'une portée (10) du module de maintien (6) destinée à venir en contact avec ladite pièce (2).

4. Dispositif selon les revendications 2 et 3, **caractérisé en ce que** ladite portée (10) appartient à l'organe d'adhésion (8a, 8b).

5. Dispositif selon l'une des revendications 2 à 4, **caractérisé en ce que** l'organe d'adhésion (8a, 8b) comporte un système d'aspiration.

6. Dispositif selon l'une quelconque des revendications précédentes, **caractérisé en ce que** le module de centrage (5) comporte deux éléments d'appui (11a, 11b) présentant chacun une surface (12a, 12b) destinée à coopérer avec ladite pièce (2), lesdites surfaces (12a, 12b) étant incluses dans des plans distincts et sécants.

7. Dispositif selon l'une quelconque des revendications précédentes, **caractérisé en ce que** ladite pièce (2) à réceptionner étant une garniture de pavillon de toit, le module de mise en référence (3) est configuré de sorte à coopérer avec deux ouvertures (4) du pavillon de toit disposées de manière opposée et destinées au montage des pare-soleils avant du véhicule automobile ou **en ce que** le module de mise en référence (3) est configuré de sorte à coopérer avec deux ouvertures d'une pièce à réceptionner se présentant sous la forme d'une tôle formant une partie d'un véhicule automobile.

8. Dispositif selon l'une quelconque des revendications précédentes, **caractérisé en ce qu'**il comporte un module de paramétrage (13) configuré de sorte à adapter ledit dispositif de réception (1) à un modèle particulier de la pièce (2) à réceptionner, notamment le module de paramétrage (13) comporte une entrée configurée de sorte à réceptionner des données, en particulier des données d'un modèle numérique de ladite pièce (2) à réceptionner, et une sortie reliée à des actionneurs permettant d'adapter, en fonction des données réceptionnées, le réglage du module de mise en référence (3) et/ou du module de maintien (6) et/ou du module de centrage (5) au sein du référentiel.

9. Dispositif selon l'une quelconque des revendications précédentes, **caractérisé en ce qu'**il comporte une pluralité de modules de maintien (6) et **en ce que** le module de mise en référence (3) et les modules de maintien (6) sont échelonnés le long d'un même axe (X).

10. Installation de travail sur une pièce (2) d'un véhicule automobile **caractérisée en ce qu'**elle comporte un dispositif de réception (1) de ladite pièce (2) selon l'une quelconque des revendications précédentes, et au moins un outil destiné à modifier ladite pièce (2), notamment un outil de découpe.

11. Procédé de réception d'une pièce (2) dans un dispositif de réception (1) selon l'une des revendications 1 à 9, comprenant les étapes suivantes :
- réception de données d'un modèle numérique de la pièce à réceptionner ;
- transmission d'instructions de réglage à des actionneurs permettant d'adapter, en fonction des données réceptionnées, le réglage du module de mise en référence (3) et/ou le réglage du module de maintien (6) et/ou le réglage du module de centrage (5) du dispositif de réception (1) au sein du référentiel pour adapter le dispositif de réception à la pièce (2) à réceptionner ;
**caractérisé en ce que** l'étape de transmission d'instructions de réglage comprend le réglage du dispositif de réception (1) dans un référentiel orthonormé défini par trois axes X, Y et Z, de sorte que le module de mise en référence (3) est configuré de sorte à présenter un réglage selon deux axes distincts respectivement parallèles aux axes Y et Z, et/ou le module de maintien (6) est configuré de sorte à présenter un réglage selon trois axes distincts respectivement parallèles aux axes X, Y et Z.

12. Procédé de réception d'une pièce (2) selon la revendication précédente, **caractérisé en ce que** la pièce (2) à réceptionner comprend deux ouvertures, disposées de manière opposée et destinées au montage d'accessoires du véhicule automobile, ou est une tôle formant une partie d'un véhicule automobile, et **en ce que** le procédé comprend une étape de mise en référence de sorte que le module de mise en référence (3) coopère avec les deux ouvertures de la pièce à réceptionner.

## Patentansprüche

1. Aufnahmevorrichtung (1) für ein Teil (2) eines Kraftfahrzeugs, wobei die Aufnahmevorrichtung mit einem Modul zur Referenzierung (3) des Teils (2), das dazu ausgebildet ist, mit wenigstens einer Öffnung (4a, 4b) des Teils (2) zusammenzuwirken, einem Modul zur Zentrierung (5) des Teils (2) und einem Modul zum Halten (6) des Teils im Verhältnis zu einem Bezugssystem der Aufnahmevorrichtung (1) versehen ist, wobei das Bezugssystem orthonormiert und von drei Achsen X, Y und Z definiert ist, wobei das Referenzierungsmodul (3) dazu ausgebildet ist, eine Einstellung auf zwei gesonderten Achsen aufzuweisen, die jeweils parallel zur Y- und Z-Achse verlaufen, **dadurch gekennzeichnet, dass** das Haltemodul (6) dazu ausgebildet ist, eine Einstellung auf drei gesonderten Achsen aufzuweisen, die jeweils parallel zur X-, Y- und Z-Achse verlaufen.

2. Vorrichtung nach dem vorhergehenden Anspruch, **dadurch gekennzeichnet, dass** das Haltemodul (6) wenigstens ein Haftorgan (8a, 8b), zum Beispiel einen Saugnapf, aufweist, das dazu ausgebildet ist, mit einer Außenfläche des Teils (2) zusammenzuwirken.

3. Vorrichtung nach einem der vorhergehenden Ansprüche, **dadurch gekennzeichnet, dass** das Haltemodul (6) wenigstens ein Kugelgelenk (9) aufweist, das es ermöglicht, die Neigung einer Auflagefläche (10) des Haltemoduls (6) anzupassen, die dazu bestimmt ist, mit dem Teil (2) in Kontakt zu treten.

4. Vorrichtung nach den Ansprüchen 2 und 3, **dadurch gekennzeichnet, dass** die Auflagefläche (10) zum Haftorgan (8a, 8b) gehört.

5. Vorrichtung nach einem der Ansprüche 2 bis 4, **dadurch gekennzeichnet, dass** das Haftorgan (8a, 8b) ein Ansaugsystem aufweist.

6. Vorrichtung nach einem der vorhergehenden Ansprüche, **dadurch gekennzeichnet, dass** das Zentriermodul (5) zwei Stützelemente (11a, 11b) aufweist, die jeweils eine Fläche (12a, 12b) aufweisen, die dazu bestimmt ist, mit dem Teil (2) zusammenzuwirken, wobei die Flächen (12a, 12b) in gesonderten und sich schneidenden Ebenen enthalten sind.

7. Vorrichtung nach einem der vorhergehenden Ansprüche, **dadurch gekennzeichnet, dass**, wobei das aufzunehmende Teil (2) eine Dachverkleidung ist, das Referenzierungsmodul (3) dazu ausgebildet ist, mit zwei Öffnungen (4) des Dachs zusammenzuwirken, die gegenüberliegend angeordnet sind und für die Anbringung der vorderen Sonnenblenden des Kraftfahrzeugs bestimmt sind, oder dadurch, dass das Referenzierungsmodul (3) dazu ausgebildet ist, mit zwei Öffnungen eines aufzunehmenden Teils zusammenzuwirken, das in Form eines Blechs vorliegt, das einen Abschnitt eines Kraftfahrzeugs bildet.

8. Vorrichtung nach einem der vorhergehenden Ansprüche, **dadurch gekennzeichnet, dass** sie ein Parametrierungsmodul (13) aufweist, das dazu ausgebildet ist, die Aufnahmevorrichtung (1) an ein bestimmtes Modell des aufzunehmenden Teils (2) anzupassen, insbesondere das Parametrierungsmodul (13) einen Eingang, der dazu ausgebildet ist, Daten zu empfangen, insbesondere Daten eines digitalen Modells des aufzunehmenden Teils (2), und einen Ausgang aufweist, der mit Aktuatoren verbunden ist, mit denen die Einstellung des Referenzierungsmoduls (3) und/oder des Haltemoduls (6) und/oder des Zentrierungsmoduls (5) innerhalb des Bezugssystems je nach den empfangenen Daten angepasst werden kann.

9. Vorrichtung nach einem der vorhergehenden Ansprüche, **dadurch gekennzeichnet, dass** sie eine Mehrzahl von Haltemodulen (6) aufweist, und dadurch, dass das Referenzierungsmodul (3) und die Haltemodule (6) entlang ein und derselben Achse (X) gestaffelt sind.

10. Anlage zur Bearbeitung eines Teils (2) eines Kraftfahrzeugs, **dadurch gekennzeichnet, dass** sie eine Aufnahmevorrichtung (1) für das Teil (2) nach einem der vorhergehenden Ansprüche und wenigstens ein Werkzeug zur Modifizierung des Teils (2), insbesondere ein Schneidwerkzeug, aufweist.

11. Verfahren zur Aufnahme eines Teils (2) in einer Aufnahmevorrichtung (1) nach einem der Ansprüche 1 bis 9, umfassend die folgenden Schritte:
- Empfangen von Daten eines digitalen Modells des aufnehmenden Teils;
- Übertragen von Einstellanweisungen an Aktuatoren, mit denen die Einstellung des Referenzierungsmoduls (3) und/oder des Haltemoduls (6) und/oder des Zentrierungsmoduls (5) der Aufnahmevorrichtung (1) innerhalb des Bezugssystems je nach den empfangenen Daten angepasst werden kann, um die Empfangsvorrichtung an das aufzunehmende Teil (2) anzupassen;
**dadurch gekennzeichnet, dass** der Schritt des Übertragens von Einstellanweisungen das Einstellen der Aufnahmevorrichtung (1) in einem orthonormierten Bezugssystem umfasst, das von drei Achsen X, Y und Z definiert ist, so dass das Referenzierungsmodul (3) dazu ausgebildet ist, eine Einstellung auf zwei gesonderten Achsen aufzuweisen, die jeweils parallel zur Y- und Z-Achse verlaufen, und/oder das Haltemodul (6) dazu ausgebildet ist, eine Einstellung auf drei gesonderten Achsen aufzuweisen, die jeweils parallel zur X-, Y- und Z-Achse verlaufen.

12. Verfahren zur Aufnahme eines Teils (2) nach dem vorhergehenden Anspruch, **dadurch gekennzeichnet, dass** das aufzunehmende Teil (2) zwei Öffnungen umfasst, die gegenüberliegend angeordnet sind und für die Anbringung von Zubehörteilen des Kraftfahrzeugs bestimmt sind, oder ein Blech ist, das einen Abschnitt eines Kraftfahrzeugs bildet, und dadurch, dass das Verfahren einen Schritt des Referenzierens umfasst, so dass das Referenzierungsmodul (3) mit den zwei Öffnungen des aufzunehmenden Teils zusammenwirkt.

## Claims

1. Device (1) for receiving a part (2) of a motor vehicle, said receiving device being equipped with a module (3) for referencing said part (2), which referencing module is configured in such a way as to collaborate with at least one opening (4a, 4b) in said part (2), with a module (5) for centring said part (2), and with a module (6) for holding said part with respect to a frame of reference of said receiving device (1), said frame of reference is an orthonormal frame of reference defined by three axes X, Y and Z, the referencing module (3) being configured so as to offer adjustment along two distinct axes respectively parallel to the axes Y and Z, **characterized in that** the holding module (6) is configured to offer adjustment in three distinct axes respectively parallel to the axes X, Y and Z.

2. Device according to the preceding claim, **characterized in that** the holding module (6) comprises at least one adhesion member (8a, 8b), for example a suction cup, configured so as to collaborate with an exterior surface of said part (2) .

3. Device according to one of the preceding claims, **characterized in that** the holding module (6) comprises at least one ball joint (9) making it possible to adapt the inclination of a bearing surface (10) of the holding module (6) which surface is intended to come into contact with said part (2).

4. Device according to Claims 2 and 3, **characterized in that** said bearing surface (10) belongs to the adhesion member (8a, 8b).

5. Device according to one of Claims 2 to 4, **characterized in that** the adhesion member (8a, 8b) comprises a suction system.

6. Device according to any one of the preceding claims, **characterized in that** the centring module (5) comprises two pressing elements (11a, 11b) each having a surface (12a, 12b) intended to collaborate with said part (2), said surfaces (12a, 12b) being contained within planes that are distinct and secant.

7. Device according to any one of the preceding claims, **characterized in that** with said part (2) to be received being a roof headlining, the referencing module (3) is configured to collaborate with two openings (4) in the roof, which openings are arranged opposite each other and intended for the mounting of the front sun visors of the motor vehicle or **in that** the referencing module (3) is configured to collaborate with two openings in a part that is to be received and that takes the form of a metal sheet that forms part of a motor vehicle.

8. Device according to any one of the preceding claims, **characterized in that** it comprises a setup module (13) configured to adapt said receiving device (1) to suit a particular model of the part (2) that is to be received, the setup module (13) notably comprising an input configured to receive data, particularly data from a numerical model of said part (2) that is to be received, and an output connected to actuators so that the setup of the referencing module (3) and/or of the holding module (6) and/or of the centring module (5) within the frame of reference can be adapted according to the data received.

9. Device according to any one of the preceding claims, **characterized in that** it comprises a plurality of holding modules (6) and **in that** the referencing module (3) and the holding modules (6) are staged along the one same axis (X).

10. Facility for working on a motor vehicle part (2), **characterized in that** this facility comprises a device (1) for receiving said part (2) according to any one of the preceding claims, and at least one tool intended to modify said part (2), notably a cutting tool.

11. Method for receiving a part (2) in a receiving device (1) according to one of Claims 1 to 9, comprising the following steps:
- receiving data from a numerical model of the part that is to be received;
- transmitting setup instructions to actuators so that the setup of the referencing module (3) and/or the setup of the holding module (6) and/or the setup of the centring module (5) of the receiving device (1) within the frame of reference can be adapted according to the data received so as to adapt the receiving device to suit the part (2) that is to be received;
**characterized in that** the step of transmitting setup instructions comprises the setting-up of the receiving device (1) in an orthonormal frame of reference defined by three axes X, Y and Z so that the referencing module (3) is configured to offer adjustment in two distinct axes respectively parallel to the axes Y and Z and/or the holding module (6) is configured to offer adjustment in three distinct axes respectively parallel to the axes X, Y and Z.

12. Method for receiving a part (2) according to the preceding claim, **characterized in that** the part (2) that is to be received comprises two openings positioned opposite each other and intended for the mounting of accessories of the motor vehicle, or is a metal sheet that forms part of a motor vehicle, and **in that** the method comprises a referencing step such that the referencing module (3) collaborates with the two openings in the part that is to be received.
